# EUROPÄISCHE PATENTSCHRIFT

(11) **EP 1 654 139 B1**
(45) Veröffentlichungstag und Bekanntmachung des Hinweises auf die Patenterteilung: **23.04.2008**
(21) Anmeldenummer: 04762458.0
(22) Anmeldetag: 22.07.2004
(51) Int. Cl.: B60K 31/00

(54) **FAHRERASSISTENZSYSTEM MIT FUNKTIONSPERREINRICHTUNG**
DRIVER ASSISTANCE SYSTEM HAVING A FUNCTION BLOCKING DEVICE
SYSTEME D'ASSISTANCE A LA CONDUITE AVEC DISPOSITIF DE VERROUILLAGE DE FONCTION

(30) Priorität: 07.08.2003 DE 10336333
(43) Veröffentlichungstag der Anmeldung: 10.05.2006
(73) Patentinhaber: ROBERT BOSCH GMBH, 70442 Stuttgart (DE)
(72) Erfinder: BRAEUCHLE, Goetz, 74934 Reichartshausen (DE); SCHROEDER, Carsten, 71272 Renningen (DE); PETSCHNIGG, Peter, 70469 Stuttgart (DE)
(86) Internationale Anmeldenummer: PCT/DE2004/001608
(87) Internationale Veröffentlichungsnummer: WO 2005/014327

(56) Entgegenhaltungen:
- EP-A- 1 096 457
- EP-A- 1 195 669
- EP-A- 1 288 055
- DE-A- 10 004 525
- DE-A- 10 052 816
- DE-A- 10 129 149
- DE-A- 19 958 520

## Beschreibung

### Stand der Technik

Die Erfindung betrifft ein Fahrerassistenzsystem für Kraftfahrzeuge, mit mindestens einer Assistenzfunktion, die nur unter bestimmten Voraussetzungen zu benutzen ist.

Kraftfahrzeuge werden zunehmend mit Fahrerassistenzsystemen ausgerüstet, die den Fahrer bei der Führung des Kraftfahrzeugs unterstützen. Ein Beispiel eines solchen Fahrerassistenzsystems, das bereits am Markt eingeführt ist, ist ein System zu adaptiven Abstands- und Geschwindigkeitsregelung (ACC; Adpative Cruise Control), das für die Nutzung auf Autobahnen und gut strukturierten Straßen vorgesehen ist, und es gestattet, vorausfahrende Fahrzeuge beispielsweise mit Hilfe eines Radarsystems zu orten und die Geschwindigkeit des eigenen Fahrzeugs so anzupassen, daß das vorausfahrende Fahrzeug in einem angemessenen Abstand verfolgt wird, oder, wenn kein vorausfahrendes Fahrzeug geortet wird, die Geschwindigkeit des eigenen Fahrzeugs auf eine vom Fahrer gewählte Wunschgeschwindigkeit zu regeln. Für schlecht ausgebaute Landstraßen und für den Stadtverkehr, sind solche Systeme noch nicht geeignet, weil für die komplexeren Bedingungen des Stadtverkehrs eine aufwendigere Sensorik zur Erfassung des Verkehrsumfelds benötigt wird. Die bekannten ACC-Systeme sind deshalb nur im oberen Geschwindigkeitsbereich, beispielsweise bei einer Geschwindigkeit oberhalb von 30 km/h zu benutzen.

Aus der DE 100 04 525, die den nächstliegenden Stand der Technik bildet, ist ein Verfahren zur Regelung der Geschwindigkeit eines Kraftfahrzeuges und des Abstandes des Kraftfahrzeuges zu mindestens einem vorausfahrenden Kraftfahrzeug bekannt, bei dem die Geschwindigkeit des Kraftfahrzeuges sowie der Abstand zu dem vorausfahrenden Kraftfahrzeug bestimmt werden und bei dem mit Hilfe eines Navigationssystems der geographische Ort des Kraftfahrzeuges bestimmt wird, und die Abstandsregelung in Abhängigkeit von der befahrenden Straße eingestellt wird, indem mit Hilfe der Daten des Navigationssystems die Art der befahrenen Straße bestimmt wird und in Abhängigkeit von der Art der befahrenen Straße die Parameter der Abstandsregelung eingestellt werden. Weiterhin kann vorgesehen sein, dass innerhalb von Ortschaften die Abstandsregelung ausgeschaltet wird.

Aus der DE 199 58 520 ist ein Geschwindigkeitsregler bekannt, der nicht nur ab einer bestimmten Mindestgeschwindigkeit die Fahrgeschwindigkeit des Fahrzeugs regelt, sondern auch bei Geschwindigkeiten unterhalb einer vorgegebenen Grenzgeschwindigkeit bis hin zum Stillstand des Fahrzeugs. Durch Erfassung der Verkehrssituation durch einen Abstandssensor kann auch ein automatisches Anfahren des Fahrzeugs erfolgen, wenn der Fahrer auf einen entsprechenden Anfahrhinweis reagiert hat.

Aus der DE 100 52 816 ist eine Vorrichtung zur Durchführung einer von der Betätigung des Bremspedals unabhängigen Bremsung eines Fahrzeuges bekannt, wobei die Bremsung durch Ansteuerung von den Rädern des Fahrzeuges zugeordneten Bremsaktuatoren durchgeführtwird. Die Vorrichtung enthält Mittel, mit denen festgestellt wird, ob eine von der Betätigung des Bremspedals unabhängige Bremsung durchgeführt werden soll. Für den Fall, daß eine von der Betätigung des Bremspedals unabhängige Bremsung durchgeführt werden soll, werden hierzu die Bremsaktuatoren gemäß einer Regelung der Verzögerung des Fahrzeuges angesteuert.

Aus der EP 1096 457 ist ein Verfahren sowie eine Einrichtung zur elektronischen Erkennung von Verkehrszeichen bekannt, bei welchem die Verkehrszeichen mit einer im Kraftfahrzeug angeordneten elektronischen Kamera erfaßt und über Mustervergleichsverfahren elektronisch gedeutet und im Kraftfahrzeug angezeigt werden oder auf die automatische Geschwindigkeitsregelung des Kraftfahrzeuges einwirken Zur besseren Verkehrsführung bei gleichzeitiger Erhöhung der Fahrsicherheit und des Fahrkomforts, wird vorgeschlagen, die elektronische Verkehrszeichenerkennung mit einer automatischen Distanzregelung sowie einer automatischen Notbremsbetätigung zu korrelieren, daß sowohl ein automatischer Eingriff auf die Beschleunigung und Verzögerung des Fahrzeuges gegeben ist als auch zusätzlich zur Verkehrszeichenerkennung noch verifiziert wird, ob die erkannte Geschwindigkeit aufgrund vorausfahrender Fahrzeuge oder Hindernisse überhaupt ausgeführt werden kann.

Es gibt jedoch Bestrebungen, den Einsatzbereich solcher Assistenzfunktionen auf komplexere Verkehrssituationen zu erweitern. So sind z. B. ACC-systeme in Entwicklung, die als erweiterte Funktion eine sogenannte LSF-Funktion (Low Speed Following) aufweisen, die in einem bis zum Stillstand erweiterten Geschwindigkeitsbereich benutzbar ist. Dadurch soll beispielsweise bei einem Verkehrstau auf einer Autobahn oder einer gut strukturierten Landstraße die Möglichkeit geschaffen werden, die Geschwindigkeit des eigenen Fahrzeugs im Staubetrieb oder beim Auffahren auf ein Stauende auch unter die Grenze von 30 km/h zu reduzieren und das Fahrzeug notfalls bis in den Stand abzubremsen, falls das vorausfahrende Fahrzeug anhält. Wenn sich das vordere Fahrzeug nach kurzem Halt wieder in Bewegung setzt, soll diese Funktion zum Beispiel auch das automatische Wiederanfahren des eigenen Fahrzeugs steuern können. Für den Betrieb beispielsweise im Stadtverkehr ist allerdings auch diese Funktion noch nicht geeignet.

Das komplexe Umfeld innerstädtischer Straßen mit Ampeln, Kreuzungen, parkende Fahrzeugen und Fußgängern, etc. kann mit der derzeit eingesetzten Umfeldsensorik nicht zufriedenstellen erfaßt werden.
Die Nutzung der LSF-Funktion in diesen Situationen kann deshalb situationsbedingt zu falschen Reaktionen führen, etwa in der Form einer fehlenden Reaktion auf relevante Hindernisse oder in der Form einer unnötigen Reaktion auf vom Radarsystem erfaßte Scheinhindernisse.

Es sollten deshalb Vorkehrungen für den Fall getroffen werden, daß der Fahrer diese LSF-Funktion mißbräuchlich auch in Situationen einsetzt, in denen die Voraussetzungen für den sicheren Betrieb dieser Funktion nicht geeignet sind, oder daß der Fahrer es etwa bei der Binfahrt in eine geschlossene ortschaft versäumt, die Funktion zu deaktivieren.

### Vorteile der Erfindung

Die Erfindung mit den im Anspruch angegebenen Merkmalen bietet den Vorteil, daß eine Assistenzfunktion, beispielsweise die oben genannte LSF-Funktion, automatisch gesperrt wird, wenn deutliche Anhaltspunkte dafür vorliegen, daß die Voraussetzungen für den bestimmungsgemäßen Betrieb dieser Funktionen nicht erfüllt sind. Für die Erkennung solcher Anhaltspunkte weist das erfindungsgemäße Fahrerassistenzsystem eine Erfassungseinrichtung auf, die Daten über die Örtlichkeit erfaßt, in der sich das Fahrzeug gegenwärtig aufhält. Anhand dieser Daten kann das System beispielsweise erkennen, daß sich das Fahrzeug in einer geschlossenen Ortschaft oder, allgemeiner, in einem Umfeld befindet, in dem die betreffende Assistenzfunktion nicht benutzt werden sollte. Eine Sperreinrichtung sorgt dann dafür, daß die Assistenzfunktion unter diesen Bedingungen nicht durch den Fahrer aktiviert werden kann und/oder daß die Funktion, sofern sie noch aktiv ist, automatisch deaktiviert wird. Auf diese Weise bietet die Erfindung einerseits einen erhöhten Komfort durch Bereitstellen der Assistenzfunktion unter hierfür geeigneten Bedingungen und sie trägt andererseits zur Erhöhung der Verkehrssicherheit, indem sie einen Betrieb der Funktion unter ungeeigneten Bedingungen verhindert. Zugleich wird auf diese weise das Systemverhalten für den Fahrer transparenter.

Die Erfassungseinrichtung kann beispielsweise durch ein Navigationssystem oder durch eine Schnittstelle zu einem Navigationssystem gebildet werden, das häufig ohnehin in dem Fahrzeug vorhanden ist. Bekannte Navigationssysteme stellen Ortsinformation über den aktuellen Ort des Fahrzeugs sowie Information über das Straßennetz und den Straßenverlauf in Form einer gespeicherten Landkarte zur Verfügung. Häufig sind bei bekannten Navigationssystemen in der gespeicherten Landkarte auch bereits die Umrisse von geschlossenen Ortschaften markiert, so daß das Navigationssystem der Sperreinrichtung die Information bereitstellen kann, daß das Fahrzeug sich in einer geschlossenen Ortschaft befindet.

Wahlweise kann die Erfassungseinrichtung auch ein besonderes System zur Auswertung der Eigenbewegung des Fahrzeugs aufweisen oder durch ein solches System gebildet werden.

Die Erfassungseinrichtung kann ein so genanntes intelligentes Navigationssystem sein, das über die Ortsinformation und Information über das Straßennetz hinaus auch Fahrbahnattribute zur Verfügung stellt, beispielsweise Informationen über die Anzahl der Fahrspuren, Geschwindigkeitsbegrenzungen und dergleichen. Diese Informationen erlauben eine noch genauere Klassifizierung des aktuellen Verkehrsumfeldes und ermöglichen es so z. B., die sperre der Assistenzfunktion auf innerörtlichen Schnellstraßen aufzuheben.

Alternativ kann das Erfassungssystem auch eine Empfangseinrichtung für Telematik-Daten aufweisen. In diesem Fall wird die Information über den Straßentyp, die für die Entscheidung benötigt wird, ob die Assistenzfunktion benutzbar ist oder nicht, von einem Telematik-Dienstleister beispielsweise drahtlos über Funkbaken zur Verfügung gestellt, so daß sie von der Empfangseinrichtung des Fahrzeugs empfangen und ausgewertet werden kann. Eine solche Empfangseinrichtung kann auch mit einem intelligenten Navigationssystem kombiniert werden und kann dann beispielsweise auch dazu dienen, die Fahrbahnattribute und sonstige lokale Informationen nach Bedarf in das intelligente Navigationssystem herunterzuladen.

Gemäß einer weiteren Ausführungsform der Erfindung wird die Erfassunseinrichtung durch eine geeignete Videosensorik gebildet, beispielsweise durch mindestens eine videokamera und einer zugehörigen Bilderkennungelektronik, mit der Verkehrsschilder, Ortsschilder und dergleichen erkannt werden können. Die Erkennung von ortseingangs-und ortsausgangsschildern dient dann zur Steuerung der Sperreinrichtung. Zugleich können mit dieser Videosensorik auch Streckenverbotsschilder wie Geschwindigkeitsbegrenzungen und dergleichen erkannt und automatisch bei der Geschwindigkeitsregelung im Rahmen der Assistenzfunktion berücksichtigt werden.

Wenn durch Erkennung eines Ortseingangsschildes das Einfahren in eine geschlossene Ortschaft detektiert wird, so wird diese Information vorzugsweise in einem nichtflüchtigen Speicher abgelegt, so daß sie auch nach einem vorübergehenden Abschalten der Zündung des Fahrzeugs noch zur Verfügung steht. Somit bleibt die Assistenzfunktion auch nach einer Fahrtunterbrechung gesperrt, bis wieder ein Ortsausgangsschild erkannt wird. Je nach Ausführungsform kann vorgesehen sein, daß die Sperre durch eine aktive Intervention des Fahrers aufhebbar ist oder nicht. Bei der letzteren Version kann der Fahrer die Sperre übersteuern, nachdem er einen Hinweis zur Kenntnis genommen hat, daß das System einen Zustand erkannt hat, in dem die Einsatzvoraussetzungen nicht gegeben sind. Die Sperre und der Hinweis haben dann lediglich Warnfunktion, während die letzte Entscheidung und die Verantwortung beim Fahrer verbleibt. Ein vorteil dieser Version ist die leichtere Behebbarkeit von Fehlbewertungen, beispielsweise bei Nichterkennung eines Örtsausgangsschildes.

### Zeichnung

Ausführungsbeispiele der Erfindung sind in den Zeichnungen dargestellt und in der nachfolgenden Beschreibung näher erläutert.

Es zeigen:
- Figur 1: ein Blockdiagramm eines erfindungsgemäßen Fahrerassistenzsystems; und
- Figur 2: ein Blockdiagramme eines Fahrerassistenzsystems gemäß einer abgewandelten Aüsführungsform.

### Beschreibung der Ausführungsbeispiele

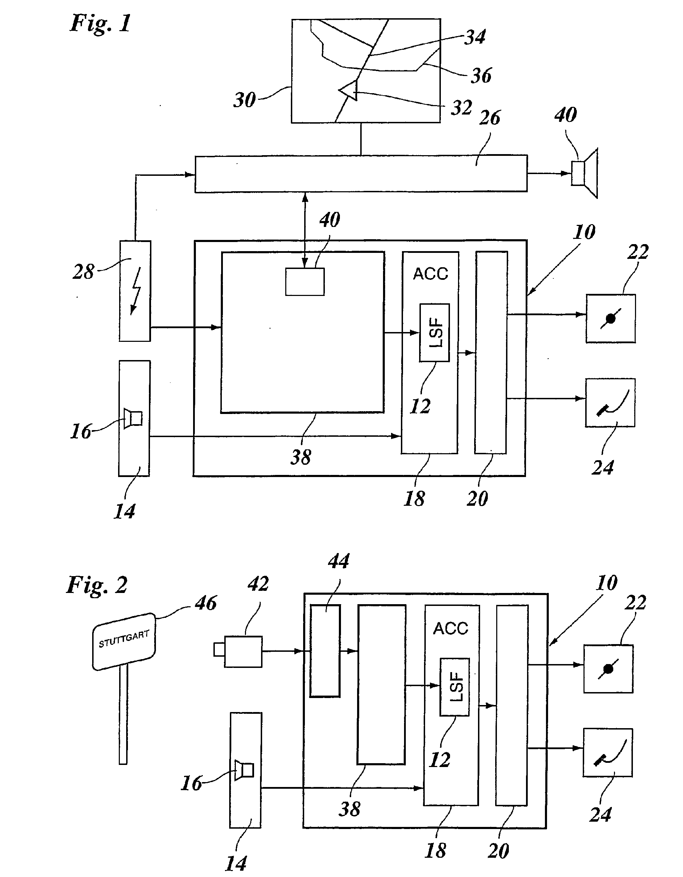

Das in Figur 1 als Blockdiagramm dargestellte Fahrerassistenzsystem eines Kraftfahrzeugs umfaßt eine ACC-Steuereinheit 10 in der neben der bekannten ACC-Funktion für höhere Geschwindigkeiten auch eine LSF-Funktion 12 (LOW Speed Following) für den unteren Geschwindigkeitsbereich implementiert ist. Die Funktionen der ACC-Steuereinheit werden beispielsweise von einem oder mehreren geeignet programmierten Mikroprozessoren ausgeführt. Der ACC-Steuereinheit 10 ist eine Sensoreinrichtung 14 zugeordnet, die mindestens einen Ortungssensor, beispielsweise einen Radarsensor 16, zur Ortung von vorausfahrenden Fahrzeugen sowie weitere nicht näher gezeigte Sensoren zur Erfassung der Zängsgeschvvindigkeit, der Gierrate sowie anderer relevanter Bewegungsdaten des eigenen Fahrzeugs umfaßt. Die Ortungsdaten der Sensoreinrichtung 14 werden in an sich bekannter Weise in einem ACC-Regler 18 verarbeitet, der über eine Befehlsausgabeeinheit 20 auf das Antriebssystem 22 und das Bremssystem 24 des Fahrzeugs einwirkt.

Der ACC-Steuereinheit 10 ist weiterhin eine Erfassungseinrichtung zur Erfassung von Daten über die aktuelle Umgebung des Fahrzeugs zugeordnet. Diese Erfassungseinrichtung wird im gezeigten Beispiel durch ein intelligentes Navigationssystem 26 mit einer Telematik-Empfangseinrichtung 28 gebildet.

Das Navigationssystem 26 enthält in bekannter Weise einen nicht näher gezeigten Datenträger, auf dem Landkarteninformation über das Straßennetz gespeichert ist. Ein entsprechender Landkartenausschnitt kann auf einem Bildschirm 30 dargestellt werden. Das Navigationssystem umfaßt außerdem ein Positionssystem, beispielsweise ein satellitengestütztes Positionssystem (GPS; Global Positioning System), mit dem sich die aktuelle Position des eigenen Fahrzeugs ermitteln läßt. Die Fahrzeugposition wird auf dem Bildschirm 30 durch einen Positionszeiger 32 angegeben, der zugleich die aktuelle Fahrtrichtung anzeigt. Weiterhin sind auf dem Bildschirm der Verlauf von Straßen 34 sowie die Umrisse 36 einer geschlossenen ortschaft zu erkennen.

Ergänzend zu der, Information über das Straßennetz sind auf dem Datenträger des Navigationssystems auch Fahrbahnattribute gespeichert, die die Fahrbahnbreite, die Anzahl der Fahrspuren, Einbahnstraßenregelungen, innerörtliche oder außerörtliche Straßen, Geschwindigkeitsbeschränkungen, Überholverbote und dergleichen angeben.

Die Telematik-Empfangseinrichtung 28 gestattet den drahtlosen Empfang von Nachrichten von einem Telematik-Dienstleister, beispielsweise von einem Verkehrsleitsystem. Diese Nachrichten können sich insbesondere auch darauf beziehen, ob die Örtlichkeit, in der sich das Fahrzeug derzeit befindet, für die Benutzung der LSF-Funktion 12 geeignet ist oder nicht. Diese Information kann entweder direkt in der ACC-Steuereinheit 10 ausgewertet werden oder zur Aktualisierung der Fahrbahnattribute im Navigationssystem 26 benutzt werden.

Die ACC-Steuereinheit 10 weist eine Sperreinrichtung 38 auf, die dazu dient, die LSF-Funktion zu sperren, falls die Örtlichkeit, in der das Fahrzeug sich befindet, nicht für die Benutzung dieser Funktion geeignet ist. Die Sperreinrichtung 38 wertet zu diesem Zweck die von der Telematik-Empfangseinrichtung 28 bereitgestellte Information aus und ist zudem über eine Schnittstelle 40 mit dem Navigationssystem 26 verbunden, so daß sie auch auf die im Navigationssystem verfügbaren Informationen zurückgreifen kann. So kann die Sperreinrichtung 38 auch anhand der im Navigationssystem gespeicherten Fahrbahnattribute und/oder der gespeicherten Umrißlinie 36 von geschlossenen Ortschaften feststellen, ob die Voraussetzungen für die Benutzung der LSF-Funktion gegeben sind.

Das Fahrerassistenzsystem kann vom Fahrer über eine an sich bekannte und hier nicht gezeigte Mensch/Maschine-Schnittstelle bedient werden. Diese Schnittstelle umfaßt mindestens einen Schalter zum Aktivieren der ACC-Funktion und/oder der LSF-Funktion sowie Anzeigelampen, die anzeigen, welche dieser Funktionen aktiv oder aktivierbar sind. Wenn die Sperreinrichtung 38 feststellt, daß die Voraussetzungen für die LSF-Funktion nicht gegeben sind, so unterbindet sie die Aktivierung der LSF-Funktion durch den Fahrer, und die entsprechende Anzeigelampe erlischt. Wenn der Fahrer dennoch versucht, die LSF-Funktion zu aktivieren, so erhält er vom Fahrerassistenzsystem den Hinweis, daß diese Funktion derzeit nicht aktivierbar ist. Für diesen Hinweis kann beispielsweise ein Sprachaüsgabesystem 40 des Navigationssystems 26 benutzt werden.

Falls die LSF-Funktion aktiv ist und die Sperreinrichtung 38 dann erkennt, daß die Voraussetzungen für diese Funktion nicht mehr gegeben sind, so wird über das Sprachausgabesystem 40 eine Übernahmeaufforderung an den Fahrer ausgegeben, die den Fahrer darauf hinweist, daß die LSF-Funktion nicht mehr zur Verfügung steht, und daß er selbst die Kontrolle über das Fahrzeug übernehmen muß. Nach einer gewissen verzögerungszeit wird dann die LSF-Funktion automatisch deaktiviert.

Figur 2 zeigt eine abgewandelte Ausführungsform, bei der die Erfassungseinrichtung zur Erfassung von Daten über die Örtlichkeit durch eine videokamera 42 mit zugehöriger Bilderkennungseinheit 44 gebildet wird. Die Bilderkennungseinheit 44 ist so ausgebildet, daß sie Verkehrsschilder einschließlich Ortseingangs- und Ausgangsschildern erkennen kann. Wenn auf diese Weise beispielsweise bei der Einfahrt in einr geschlossen ortschaft ein ortseingangsschild 46 detektiert wird, so wird daraufhin durch die Sperreinrichtung 38 die LSE-Funktion gesperrt. Die Sperre wird wieder aufgehoben, sobald durch die Videosensorik ein Ortsausgangsschild erkannt wird.

## Patentansprüche

1. Fahrerassistenzsystem für Kraftfahrzeuge, mit mindestens einer Assistenzfunktion (12), die nur unter bestimmten Voraussetzungen zu benutzen ist, die eine Erfassungseinrichtung (26, 28; 42, 44) aufweist zur Erfassung von Daten über die Örtlichkeit, in der sich das Fahrzeug aufhält, wobei die Assistenzfunktion (12) eine Low-Speed-Following-Funktion (LST) ist, die das Fahrzeug derart steuert, daß es ein vorausfahrendes Fahrzeug in angemessenem Abstand verfolgt und die, wenn es die örtlichen Voraussetzungen erlauben, auch bei Geschwindigkeiten unterhalb von 30 km/h nutzbar ist und die Assistenzfunktion (12) dazu ausgebildet ist, das eigene Fahrzeug automatisch in den Stand zu bremsen, wenn das verfolgte Fahrzeug anhält und
- wobei die Erfassungseinrichtung eine Videosensorik (42, 44) aufweist, die dazu ausgebildet ist, Ortseingangsschilder (46) und Ortsausgangsschilder zu erkennen, oder
- die Erfassungseinrichtung ein intelligentes Navigationssystem ist, in dem Fahrbahnattribute gespeichert sind, die angeben, ob auf der jeweiligen
- Fahrbahn die Voraussetzungen für die Assistenzfunktion (12) erfüllt sind oder nicht oder
- die Erfassungseinrichtung eine Telematik-Empfangseinrichtung (28) aufweist, die Nachrichten empfängt, die sich darauf beziehen, ob die Örtlichkeit, in der sich das Fahrzeug derzeit befindet, für die Benutzung der Low-Speed-Following-Funktion (12)geeignet ist oder nicht und
wobei eine Sperreinrichtung (38) die Assistenzfunktion (12) sperrt, wenn die erfassten Daten anzeigen, daß die Voraussetzungen für die Benutzung der Assistenzfunktion nicht erfüllt sind, indem bei Erkennen eines Ortseingangschilds (46) oder des entsprechenden Fahrbahnattributs oder bei Empfang der entsprechenden Telematik-Nachricht die LSF-Funktion durch die Sperreinrichtung (38)gesperrt wird und bei Erkennen eines Ortsausgangsschilds oder des entsprechenden Fahrbahnattributs oder bei Empfang der entsprechenden Telematik-Nachricht die Sperre der LSF-Funktion durch die Sperreinrichtung (38) wieder aufgehoben wird.

## Claims

1. Driver assistance system of motor vehicles, having at least one assistance function (12) which is to be used only under certain conditions and which has a sensing device (26, 28; 42, 44) for acquiring data about the locality in which the vehicle is situated, wherein the assistance function (12) is a low-speed-following function (LSF) which controls the vehicle in such a way that it follows a vehicle in front at an appropriate distance and which can also be used at speeds below 30 km/h if the local conditions permit, and the assistance function (12) is designed to automatically brake the driver's vehicle to a standstill if the vehicle which is being followed stops, and
- wherein the sensing device has a video sensor system (42, 44) which is designed to recognize locality entry signs (46) and locality exit signs, or
- the sensing device is an intelligent navigation system which stores underlying surface attributes which indicate whether or not the conditions for the assistance function (12) are satisfied on the respective underlying surface, or
- the sensing device has a telematic reception device (28) which receives messages which relate to whether or not the locality in which the vehicle is currently located is suitable for use of the low-speed-following function (LSF), and
wherein a blocking device (38) blocks the assistance function (12) if the acquired data indicate that the conditions for use of the assistance function are not satisfied in that, when a locality entry sign (46) or the corresponding underlying surface attribute is recognized or when the corresponding telematic message is received, the LSF function is blocked by the blocking device (38), and when a locality exit sign or the corresponding underlying surface attribute is recognized or when the corresponding telematic message is received, the blocking of the LSF function by the blocking device (38) is cancelled again.

## Revendications

1. Système d'assistance à la conduite pour des véhicules automobiles, comportant au moins une fonction d'assistance (12) qui n'est utilisée que dans certaines conditions, et comporte une installation de saisie (26, 26 ; 42, 44) pour saisir des données du lieu où se trouve le véhicule,
la fonction d'assistance (12) est une fonction de poursuite à faible vitesse (LST) qui commande le véhicule de façon à suivre un véhicule qui précède, à une distance adaptée, et qui, si les conditions locales le permettent, peut également s'utiliser à des vitesses inférieures à 30 km/h et la fonction d'assistance (12) est réalisée de façon qu'elle freine automatiquement le véhicule si le véhicule suivi s'arrête et
- l'installation de saisie comporte un capteur vidéo (42, 44) pour reconnaître des panneaux d'entrée de localité (46) et des panneaux de sortie de localité ou
- l'installation de saisie est un système de navigation intelligent contenant en mémoire, des attributs de voie de circulation indiquant si sur la voie de circulation respective les conditions de la mise en oeuvre de la fonction d'assistance (12) sont ou non remplies ou
- l'installation de saisie comporte une installation de réception en télématique (28) recevant des informations indiquant si le lieu où se trouve le véhicule convient ou non pour utiliser la fonction de poursuite à faible vitesse (12),
une installation de blocage (38) bloque la fonction d'assistance (12) si les données saisies indiquent que les conditions d'utilisation de la fonction d'assistance ne sont pas remplies par la reconnaissance d'un panneau d'entrée de localité (46) ou d'un attribut correspondant de la voie de circulation ou par la réception d'une information de télématique correspondante, la fonction d'assistance a faible vitesse est bloquée par l'installation de blocage (38) et à la reconnaissance d'un panneau de sortie de localité ou de l'attribut correspondant de la voie de circulation ou à la réception d'une information correspondante en télématique, de nouveau l'installation de blocage (38) libère le verrouillage de la fonction de poursuite à faible vitesse.
